# EUROPÄISCHE PATENTANMELDUNG

(11) **EP 4 851 581 A1**
(43) Veröffentlichungstag der Anmeldung: **09.12.2026**
(21) Anmeldenummer: 26176942.6
(22) Anmeldetag: 06.05.2026
(51) Int. Cl.: G01C 21/16

(54) **FAHRZEUG MIT EINER NAVIGATIONSSENSOREINHEIT**

(30) Priorität: 12.05.2025 DE 102025118157
(71) Anmelder: Deutsches Zentrum für Luft- und Raumfahrt e.V., 53227 Bonn (DE)
(72) Erfinder: Bestard Körner, Matias, 28359 Bremen (DE)
(74) Vertreter: REHBERG HÜPPE + PARTNER

(57) **Zusammenfassung**

Die Erfindung betrifft ein Fahrzeug (1) mit einem Grundkörper (2) und einer an dem Grundkörper (2) angeordneten Navigationssensoreinheit (3) zum Ermitteln einer Position und/oder Orientierung des Fahrzeugs (1) in einer Umgebung (4), wobei die Position und/oder Orientierung des Fahrzeugs (1) bestimmt ist durch eine um eine Relativposition und/oder Relativorientierung der Navigationssensoreinheit (3) relativ zu dem Grundkörper (2) des Fahrzeugs (1) korrigierte Position und/oder Orientierung der Navigationssensoreinheit (3) in der Umgebung (4). Um sicherzustellen, dass die Position und/oder Orientierung des Fahrzeugs (1) auch bei mechanischen Einwirkungen auf die Navigationssensoreinheit (3) korrekt ermittelt wird, wird vorgeschlagen, dass das Fahrzeug (1) eine Detektionseinrichtung (5) aufweist, die ausgebildet ist, um die Relativposition und/oder Relativorientierung der Navigationssensoreinheit (3) zeitlich fortlaufend zu detektieren, wobei das Fahrzeug (1) eine Recheneinrichtung (6) aufweist, die ausgebildet ist, um aus den zeitlich fortlaufend detektierten Relativpositionen und/oder Relativorientierungen eine Änderung der Relativposition und/oder Relativorientierung zu ermitteln und die von der Navigationssensoreinheit (3) ermittelte Position und/oder Orientierung des Fahrzeugs (1) um die von der Recheneinrichtung (6) ermittelte Änderung der Relativposition und/oder Relativorientierung der Navigationssensoreinheit (3) zu korrigieren.

## Beschreibung

### TECHNISCHES GEBIET DER ERFINDUNG

Die Erfindung betrifft ein Fahrzeug mit einem Grundkörper und einer an dem Grundkörper angeordneten Navigationssensoreinheit zum Ermitteln einer Position und/oder Orientierung des Fahrzeugs in einer Umgebung, wobei die Position und/oder Orientierung des Fahrzeugs bestimmt ist durch eine um eine Relativposition und/oder Relativorientierung der Navigationssensoreinheit relativ zu dem Grundkörper des Fahrzeugs korrigierte Position und/oder Orientierung der Navigationssensoreinheit in der Umgebung.

### STAND DER TECHNIK

Fahrzeuge der hier behandelten Art sind insbesondere bemannte oder unbemannte Raumfahrzeuge, Luftfahrzeuge, Landfahrzeuge und/oder Wasserfahrzeuge, die beispielsweise eine inertiale Messeinheit (Inertial Measurement Unit, IMU), eine GNSS-Einrichtung (Globales Navigationssatellitensystem) und/oder ein Hodometer aufweisen, um die Position, Orientierung und/oder Geschwindigkeit des Fahrzeugs im Raum, d.h. in der Umgebung des Fahrzeugs, zu ermitteln. Zu den Fahrzeugen zählen hier ebenso bewegliche Vorrichtungen oder Vorrichtungsteilbereiche, die mit Hilfe derartiger Messeinheiten in der Umgebung lokalisiert werden, beispielsweise Werkzeugarme von industriellen Robotern.

Insbesondere Luftfahrzeuge, wie Flugzeuge oder Raketen, verfügen häufig über eine inertiale Messeinheit. Die IMU kombiniert mehrere Inertialsensoren, nämlich drei oder mehr üblicherweise orthogonal zueinander orientierte Translationssensoren (Beschleunigungssensoren) für die Erfassung linearer Bewegungen und drei oder mehr üblicherweise orthogonal zueinander orientierte gyroskopische Sensoren (Drehratensensoren) für die Erfassung rotierender Bewegungen.

Alternativ oder zusätzlich können Fahrzeuge zur Positionsbestimmung von dem Globalen Navigationssatellitensystem (GNSS) Gebrauch machen. Dazu weisen die Fahrzeuge GNSS-Empfänger auf, die codierte Radiosignale von GNSS-Satelliten empfangen können, welche ständig eine Information über ihre aktuelle Position, d.h. die Position der GNSS-Satelliten, ausstrahlen.

Ebenso sind bei Landfahrzeugen, zumindest als ergänzende Systeme, Hodometer für eine Positionsbestimmung des Fahrzeugs relativ zu einem definierten Startpunkt bekannt. Hodometer schätzen eine Position und Orientierung des Fahrzeugs anhand der Daten eines Antriebssystems, beispielsweise durch Zählen von Radumdrehungen.

Zur Verringerung der Einwirkung von bei der Fortbewegung des Fahrzeugs auftretenden mechanischen Belastungen auf die Navigationssensoreinheit wird diese üblicherweise unter Zwischenanordnung von Halterungen, Dämpfern, Isolatoren oder ähnlichem an dem Grundkörper des Fahrzeugs, beispielsweise einem Chassis oder einer Karosserie eines Landfahrzeugs oder einem Fahrwerk oder einem Rumpf eines Luftfahrzeugs, angeordnet.

Problematisch ist dabei, dass sich die Halterung (bzw. Dämpfer und/oder Isolatoren) unter Belastung verformt und sich infolgedessen die Position und/oder Orientierung der Navigationssensoreinheit bzw. deren Sensoren relativ zu dem Grundkörper des Fahrzeugs ändert. Dadurch gibt die Navigationssensoreinheit eine falsche Position und/oder Orientierung des Fahrzeugs an, was wiederum von den Informationen der Navigationssensoreinheit abhängige Steuer- und/oder Regelungsprozesse anderer Einrichtungen des Fahrzeugs negativ beeinflussen kann.

Im Stand der Technik wird diesem Problem durch die Auswahl möglichst geeigneter Halterungen und/oder Dämpfer und/oder Isolatoren begegnet. Zusätzlich wird die Lage des Schwerpunkts der Navigationssensoreinheit mit Hilfe von Tariermassen so angepasst, dass die Beeinflussung der Navigationssensoreinheit durch dynamische Belastungen möglichst gering ist. Dies ist einerseits sehr aufwändig und kostenintensiv und andererseits fehlerbehaftet.

### AUFGABE DER ERFINDUNG

Der Erfindung liegt die Aufgabe zugrunde, ein Fahrzeug mit einer Navigationssensoreinheit zu schaffen, deren Navigationsdaten auch bei Einwirkung von mechanischen Belastungen, insbesondere dynamischen und/oder quasistationären Belastungen, korrekt sind.

### LÖSUNG

Die Aufgabe der Erfindung wird erfindungsgemäß mit den Merkmalen des unabhängigen Patentanspruchs gelöst. Weitere Ausgestaltungen sind den abhängigen Patentansprüchen zu entnehmen.

### BESCHREIBUNG DER ERFINDUNG

Die Erfindung betrifft ein Fahrzeug mit einem Grundkörper und einer an dem Grundkörper angeordneten Navigationssensoreinheit zum Ermitteln einer Position und/oder Orientierung des Fahrzeugs in einer Umgebung. Die Position und/oder Orientierung des Fahrzeugs ist durch eine um eine Relativposition und/oder Relativorientierung der Navigationssensoreinheit relativ zu dem Grundkörper des Fahrzeugs korrigierte Position und/oder Orientierung der Navigationssensoreinheit in der Umgebung bestimmt.

Erfindungsgemäß weist das Fahrzeug eine Detektionseinrichtung auf, die ausgebildet ist, um die Relativposition und/oder Relativorientierung der Navigationssensoreinheit zeitlich fortlaufend zu detektieren. Das Fahrzeug weist weiterhin eine Recheneinrichtung auf, die ausgebildet ist, um aus den zeitlich fortlaufend detektierten Relativpositionen und/oder Relativorientierungen eine Änderung der Relativposition und/oder Relativorientierung zu ermitteln und die von der Navigationssensoreinheit ermittelte Position und/oder Orientierung des Fahrzeugs um die von der Recheneinrichtung ermittelte Änderung der Relativposition und/oder Relativorientierung der Navigationssensoreinheit zu korrigieren.

Durch die Erfindung ist es beispielsweise möglich, durch Verformung einer Halterung der Navigationssensoreinheit beeinflusste Navigationsdaten zu korrigieren. Dazu wird eine durch quasistatische oder dynamische Kräfte verursachte Positions- und/oder Orientierungsänderung der Navigationssensoreinheit ermittelt und rechnerisch bei der Ermittlung der Position und/oder Orientierung des Fahrzeugs berücksichtigt. Damit wird erreicht, dass die von der Navigationssensoreinheit ermittelte Position und/oder Orientierung des Fahrzeugs von durch auf die Navigationssensoreinheit direkt oder indirekt einwirkende mechanische Kräfte verursachten Fehlern bereinigt ist und somit der tatsächlichen Position und/oder Orientierung des Fahrzeugs im Raum entspricht.

Im Gegensatz zum Stand der Technik ist es nicht erforderlich, eine Schwerpunktlage der Navigationssensoreinheit mit Hilfe von Tariermassen so anzupassen, dass die Beeinflussung der Navigationssensoreinheit durch dynamische Belastungen möglichst gering ist, oder besonderes Augenmerk auf die Verwendung von Dämpfern, Halterungen oder Isolatoren zu richten, mit deren Hilfe die Navigationssensoreinheit an dem Grundkörper des Fahrzeugs angeordnet ist. Vielmehr weist das Fahrzeug erfindungsgemäß zusätzlich eine Detektionseinrichtung auf, welche präzise Informationen über die Relativposition und/oder Relativorientierung der Navigationssensoreinheit an dem Grundkörper des Fahrzeugs liefert. Mit anderen Worten ist die Detektionseinrichtung ausgebildet, insbesondere in Echtzeit, präzise Messdaten einer Fehlausrichtung der Navigationssensoreinheit zu liefern, welche dann genutzt werden können, um beispielsweise einen Fortbewegungspfad des Fahrzeugs anzupassen.

Die Hauptquelle für Fehlausrichtungen der Navigationssensoreinheit während des Betriebs sind wie zuvor erwähnt insbesondere quasistatische Kräfte oder dynamische Kräfte, die auf die Navigationssensoreinheit wirken. Jedoch entstehen Fehlausrichtungen ebenso durch beispielsweise auf ein Gehäuse der Navigationssensoreinheit wirkende aerodynamische Kräfte oder Kräfte, die durch den Betrieb von Aktoren verursacht sind. Obwohl Korrekturen von durch Vibrationen und harmonische Kräfte verursachten Fehlausrichtungen nicht vorrangig von der Erfindung adressiert werden, kann es gegebenenfalls auch für diese Kräfte eine Rückmeldung über eine Änderung der Relativposition und/oder Relativorientierung der Navigationssensoreinheit geben.

Zudem können nicht vorhersehbare Ausrichtungsänderungen der Navigationssensoreinheit auftreten, insbesondere durch im Laufe der Zeit variierende Eigenschaften einer Halterung der Navigationssensoreinheit, welche verwendet wird, um Auswirkungen von Vibrationen auf Sensoren wie empfindliche Gyroskope und Beschleunigungsmesser oder auf strukturelle Elemente der Messkette wie optische Rahmen, Spiegel und Linsen zu reduzieren. Beispielsweise können weiche Elemente oder Materialien im Laufe der Zeit aushärten oder sonstige Alterungseffekte zeigen.

Die Erfindung ist im Folgenden insbesondere in Bezug auf sich insgesamt relativ zu einer Umgebung fortbewegende Fahrzeuge beschrieben. Alternativ kann es sich bei einem erfindungsgemäßen Fahrzeug jedoch ebenso um beispielsweise einen industriellen Roboter oder Roboterarm handeln, welcher relativ zu einem ortsfesten Referenzpunkt eines Grundkörpers, beispielsweise einer Roboterbasis oder eines Gebäudeteils, verfährt.

Der Grundkörper des Fahrzeugs kann eine Vielzahl von Aktoren, Sensoren, TMTC-Systeme (Telemetry and Telecommand), aerodynamische Körper oder andere Vorrichtungen aufweisen. Unter anderem können an dem Grundkörper des Fahrzeugs angeordnete Aktoren selbst eine Ursache für Relativpositions- und/oder Relativorientierungs-Änderungen der Navigationssensoreinheit sein.

Die der Navigationssensoreinheit zugeordnete Detektionseinrichtung kann einen einzigen oder mehrere, insbesondere mehrere unterschiedliche, Sensoren aufweisen, darunter beispielsweise inertiale, optische oder auf anderen physikalischen Messprinzipien basierende Sensoren. Wesentlich ist, dass der Sensor geeignet ist, eine Distanz oder eine Distanzänderung zwischen dem Sensor beziehungsweise der Detektionseinrichtung und einem Referenzpunkt auf dem Grundkörper des Fahrzeugs zu detektieren.

Die Detektionseinrichtung des Fahrzeugs kann die Relativposition und/oder Relativorientierung der Navigationssensoreinheit kontinuierlich oder zu definierten Zeitpunkten oder mit einer festgelegten Detektionsrate (Abtastrate) detektieren. Wesentlich ist, dass die Anzahl der Messungen pro Zeiteinheit ausreichend ist, um schnelle Positions- und/oder Orientierungsänderungen zu detektieren.

Die Navigationssensoreinheit beinhaltet alle Sensoren, die notwendig sind, um die Position, Orientierung und Geschwindigkeit des Grundkörpers des Fahrzeugs zu ermitteln. Weiterhin kann sie die zur Detektion ihrer Relativposition und/oder Relativorientierung ausgebildete Detektionseinrichtung aufweisen.

Eine der Navigationssensoreinheit zugeordnete Recheneinrichtung ist dazu ausgebildet, von den Sensoren gemessene Rohdaten zu empfangen und diese unter Nutzung von Algorithmen zu verarbeiten. Die Recheneinrichtung ermittelt auf der Basis der Rohdaten insbesondere eine Orientierung und/oder Position und/oder Geschwindigkeit der Navigationssensoreinheit bzw. des Grundkörpers des Fahrzeugs.

Die Navigationssensoreinheit und die Recheneinrichtung können baulich zusammengefasst, insbesondere in einem gemeinsamen Gehäuse, oder separat ausgebildet sein. Zwischen der Navigationssensoreinheit und der Recheneinrichtung kann vorzugsweise eine Kommunikationsverbindung mit großer Bandbreite bestehen.

Die Recheneinrichtung kann weiterhin eine Nutzerschnittstelle zum Übermitteln von Eingaben eines Nutzers aufweisen, beispielsweise zum Konfigurieren, zum Anzeigen von Messdaten und/oder zur Fehlerbehebung der Navigationssensoreinheit und/oder Detektionseinrichtung. Darüber hinaus kann die Recheneinrichtung zusätzlich Rechenaufgaben für andere Systeme des Fahrzeugs übernehmen, um beispielsweise die Notwendigkeit weiterer Recheneinrichtungen zu erübrigen und damit eine Masse oder ein Volumen des Fahrzeugs gering zu halten und/oder eine Genauigkeit und Zuverlässigkeit der errechneten Daten zu erhöhen.

Zwischen dem Grundkörper des Fahrzeugs und der Navigationssensoreinheit (und damit einer orts- und orientierungsfest an der Navigationssensoreinheit angeordneten Detektionseinrichtung) und/oder der Recheneinrichtung befindet sich eine mechanische Schnittstelle, welche die Übertragung von mechanischen Lasten ermöglicht. Die Schnittstelle kann insbesondere im Hinblick auf eine Vibrationsisolation, Wärmeübertragung, elektromagnetische Interferenz (EMI) oder andere Faktoren optimiert sein, die die Funktionsweise der Sensoren oder der Navigationssensoreinheit beeinflussen könnten.

Für die Recheneinrichtung ist eine weiche Halterung grundsätzlich nicht erforderlich. Insbesondere bietet sich aus praktischen Erwägungen eine harte oder theoretisch steife Schnittstelle an, welche die Funktionalität der Recheneinrichtung üblicherweise nicht beeinflusst.

Die Navigationssensoreinheit benötigt üblicherweise eine weiche Halterung, um diese von Vibrationen zu entkoppeln. Selbst wenn eine steife/harte Verbindung zwischen der Navigationssensoreinheit und dem Grundkörper des Fahrzeugs besteht, ist üblicherweise zumindest ein gewisser Entkopplungsgrad durch physikalische Parameter der Schnittstelle gegeben, beispielsweise aufgrund eines verwendeten Materials der Halterung, insbesondere Aluminium, Stahl, Komposite und dergleichen, welche ein gewisses, wenn auch sehr geringes Elastizitätsmodul aufweisen. Eine derartige Schnittstelle wird üblicherweise als Dämpfungssystem, Vibrationsisolationssystem oder ähnliches bezeichnet.

Gemäß einer möglichen Ausführungsform wird vorgeschlagen, dass das Fahrzeug eine an dem Grundkörper angeordnete Sende- und/oder Empfangseinrichtung zur Kommunikation mit einem externen Kommunikationspartner in einer Umgebung des Fahrzeugs aufweist, wobei eine oder die Detektionseinrichtung des Fahrzeugs ausgebildet ist, um eine Relativposition und/oder Relativorientierung der Sende- und/oder Empfangseinrichtung relativ zu dem Grundkörper des Fahrzeugs zeitlich fortlaufend zu detektieren. Die Sende- und/oder Empfangseinrichtung kann insbesondere eine Antenne und/oder eine Lichtquelle aufweisen, welche dazu ausgebildet und eingerichtet ist, mit einer korrespondierenden Sende- und/oder Empfangseinrichtung außerhalb des Fahrzeugs zu kommunizieren, beispielsweise einer Sende- und/oder Empfangseinrichtung eines anderen Fahrzeugs oder einer ortsfesten Station. Die Sende- und/oder Empfangseinrichtung des Fahrzeugs ist bevorzugt eingerichtet, um Signale an Kommunikationspartner zu übermitteln und Signale von Kommunikationspartnern zu empfangen.

Da sich die Relativposition und/oder Relativorientierung der Sende- und/oder Empfangseinrichtung relativ zu dem Grundkörper des Fahrzeugs aufgrund von mechanischen Einwirkungen, beispielsweise quasistatischen oder dynamischen Kräften, ebenso wie diejenige der Navigationssensoreinheit verändern kann, ist der Sende- und/oder Empfangseinrichtung ebenfalls eine Detektionseinrichtung zugeordnet, die die Relativposition und/oder Relativorientierung der Sende- und/oder Empfangseinrichtung relativ zu den Grundkörper des Fahrzeugs zeitlich fortlaufend detektiert. Die Detektionseinrichtung kann dieselbe Detektionseinrichtung sein, die auch die Relativposition und/oder Relativorientierung der Navigationssensoreinheit ermittelt, oder alternativ eine zusätzliche separate Detektionseinrichtung. Die Messdaten der Detektionseinrichtungen können von ein und derselben Recheneinrichtung oder alternativ von getrennten Recheneinrichtungen ausgewertet werden. Die konkrete Ausgestaltung hängt insbesondere von der räumlichen Anordnung der Navigationssensoreinheit und der Sende- und/oder Empfangseinrichtung an dem Grundkörper des Fahrzeugs ab, insbesondere konkret von deren Abstand zueinander.

Das Fahrzeug kann somit eine für die Navigation wesentliche gemeinsame Detektionseinrichtung oder zwei getrennte Detektionseinrichtungen aufweisen, nämlich einerseits zur Detektion einer Änderung der Relativposition und/oder Relativorientierung der Navigationssensoreinheit des Fahrzeugs und andererseits zur Detektion einer Änderung der Relativposition und/oder Relativorientierung der zur Kommunikation mit externen Kommunikationspartnern dienenden Sende- und/oder Empfangseinrichtung. Durch eine Integration dieser Detektionseinrichtung(en) in das Fahrzeug kann die Genauigkeit und Zuverlässigkeit einer Navigations- und Lokalisierungsfähigkeit des Fahrzeugs und/oder der Sende- und/oder Empfangseinrichtung verbessert werden. Durch die zeitlich fortlaufende Detektion der Relativposition und/oder Relativorientierung der Sende- und Empfangseinrichtung können präzise relative Bewegungsinformationen der Navigationssensoreinheit, des Grundkörpers des Fahrzeugs und der Sende- und/oder Empfangseinrichtung bereitgestellt werden.

Sende- und/oder Empfangseinrichtungen sind für viele Anwendungsbereiche von Nutzen, um Informationen senden und/oder empfangen zu können, beispielsweise für Luft- und Raumfahrtsysteme, Militärfahrzeuge, Roboterplattformen und industrielle Automatisierungsanlagen. Derartige Sende- und/oder Empfangseinrichtungen werden üblicherweise eingesetzt, um zum Datenaustausch zwischen Geräten oder Systemen Radiowellen (Funkwellen) und/oder (Laser-)Licht zu emittieren/zu empfangen. Mit Hilfe von Antennen oder Sendern, die ein solches Signal emittieren, kann über große Entfernungen mit Kommunikationspartnern kommuniziert werden.

Funk-Antennen weisen eine Richtcharakteristik auf, welche die Winkelabhängigkeit der Stärke empfangener oder gesendeter Wellen beschreibt. Bei der Entwicklung der Antennen werden die charakteristischen Parameter für bestimmte Anwendungen optimiert, wobei ein Gleichgewicht zwischen Richtwirkung, Effizienz und Reichweite angestrebt wird. Speziell Antennen mit hohem Gewinn und schmalem Hauptbrennpunkt (Hauptkeule), zum Beispiel Parabolantennen, werden verwendet, um Signale von bestimmten Satelliten oder Bodenstationen zu empfangen. Antennen mit geringem Gewinn (zum Beispiel Rundstrahlantennen) haben breitere Hauptkeulen und bieten eine isotrope Abdeckung auf Kosten einer Fokussierung der Energie. Ähnlich verhält es sich mit optischen Sende- und/oder Empfangseinrichtungen, deren Lichtkegel sich mit zunehmender Entfernung von der Lichtquelle aufweitet.

Damit die Sende- und/oder Empfangseinrichtung optimal funktionieren kann, muss deren Position und Orientierung im Raum bzw. relativ zu einem Kommunikationspartner bekannt sein. Je nach der Kommunikationssituation wird bevorzugt eher ein großer Öffnungswinkel/Abstrahlwinkel oder eher eine hohe Fokussierung/Bündelung angestrebt, letzteres beispielsweise um Störungen durch andere Signale zu verringern, die Signalstärke und Reichweite der Kommunikation zu erhöhen oder Energie für eine effizientere Datenübertragung zu bündeln. Jeder dieser Vorteile geht allerdings auf Kosten des Öffnungswinkels, d. h. des möglichen Sichtfeldes (Field of View (FOV).

Um Nachteilen einer dejustierten Sende- und/oder Empfangseinrichtung entgegenzuwirken, wird vorgeschlagen, dass das Fahrzeug eine Stell- und/oder Steuereinrichtung aufweist, welche eingerichtet ist, um eine Sende- und/oder Empfangscharakteristik und/oder die Relativposition und/oder Relativorientierung der Sende- und/oder Empfangseinrichtung in Abhängigkeit von einer aus den zeitlich fortlaufend detektierten Relativpositionen und/oder Relativorientierungen ermittelten Änderung der Relativposition und/oder Relativorientierung zu ändern. Dadurch wird eine Stell- und/oder Steuereinrichtung bereitgestellt, welche die Richtcharakteristik der Sende- und/oder Empfangseinrichtung, das heißt insbesondere der Antenne oder des Senders, anpassen kann, um eine effiziente Kommunikation mit dem Kommunikationspartner zu gewährleisten. Dadurch können insbesondere Fehlausrichtungen, welche durch externe Störungen wie mechanische Vibrationen, quasi-statische Störungen oder dynamischen Bewegungen veranlasst sind, ausgeglichen oder verringert werden. Insbesondere kann ein vollständiger Kommunikationsabbruch zu einem Kommunikationspartner verhindert werden. Die der Sende- und/oder Empfangseinrichtung zugeordnete Detektionseinrichtung liefert der Recheneinrichtung präzise Messdaten, auf deren Grundlage die Sende- und/oder Empfangscharakteristik und/oder die Relativposition und/oder Relativorientierung der Sende- und/oder Empfangseinrichtung (wieder) auf ein Optimum eingestellt werden kann, welches insbesondere durch einen minimalen Energieverbrauch und minimale Störungen gekennzeichnet ist.

Die Navigationssensoreinheit und/oder die Sende- und/oder Empfangseinrichtung kann mittels einer Vibrationsdämpfungseinrichtung an dem Grundkörper des Fahrzeugs gehalten sein. Eine solche Vibrationsdämpfungseinrichtung ist insbesondere dazu geeignet, mechanische Vibrationen, quasistatische Störungen und/oder dynamische Bewegungen zu verringern. Insbesondere können durch beispielsweise relativ weiche Materialien derartiger Vibrationsdämpfungseinrichtungen verursachte Änderungen der Relativposition und/oder Relativorientierung der Navigationssensoreinheit beziehungsweise Sende- und/oder Empfangseinrichtung durch die zugeordnete Detektionseinrichtung detektiert und durch die Recheneinrichtung quantifiziert werden, um die Position und/oder Orientierung des Fahrzeugs beziehungsweise der Sende- und/oder Empfangseinrichtung ermitteln zu können.

Die Navigationssensoreinheit und die Sende- und/oder Empfangseinrichtung können gemäß einer möglichen Ausführungsform mechanisch derart starr, insbesondere mittelbar, miteinander gekoppelt sein, dass die Änderung der Relativposition und/oder Relativorientierung der Navigationssensoreinheit relativ zu dem Grundkörper und die Änderung der Relativposition und/oder Relativorientierung der Sende- und Empfangseinrichtung relativ zu dem Grundkörper gleich sind. Die miteinander insbesondere zu einer mechanischen Einheit verbundene Navigationssensoreinheit und Sende- und/oder Empfangseinrichtung können dann als solche über beispielsweise eine Vibrationsdämpfungseinrichtung an dem Grundkörper des Fahrzeugs angeordnet sein. Durch die gemeinsame Kopplung an den Grundkörper des Fahrzeugs wirken mechanische Kräfte gleichermaßen auf die miteinander gekoppelten Einrichtungen, so dass deren Relativpositionen und/oder Relativorientierungen relativ zu dem Grundkörper des Fahrzeugs gleich sind. Mit anderen Worten sind die Einrichtungen gekoppelt, da die Sende- und Empfangseinrichtung über dieselbe mechanische Schnittstelle wie die Navigationssensoreinheit an dem Grundkörper montiert ist.

Alternativ kann vorgesehen sein, dass die Navigationssensoreinheit und die Sende- und/oder Empfangseinrichtung mechanisch derart voneinander entkoppelt sind, dass die Änderung der Relativposition und/oder Relativorientierung der Navigationssensoreinheit relativ zu dem Grundkörper des Fahrzeugs im Wesentlichen unabhängig von der Änderung der Relativposition und/oder Relativorientierung der Sende- und/oder Empfangseinrichtung relativ zu dem Grundkörper ist. Der Begriff "entkoppelt" bezieht sich darauf, dass die Einrichtungen einen gewissen Freiheitsgrad besitzen, um sich unabhängig voneinander zu bewegen, so dass die Schnittstelle zwischen den Einrichtungen nicht als unendlich starr angesehen werden kann. Dies bedeutet jedoch nicht, dass es gar keine mechanische Wechselwirkung zwischen der Navigationssensoreinheit und der Sende- und/oder Empfangseinrichtung gibt. Vielmehr können sich diese zumindest bis zu einem gewissen Grad unabhängig voneinander bewegen und/oder drehen.

Gemäß der vorgeschlagenen Ausführungsform sind die Navigationssensoreinheit und die Sende- und/oder Empfangseinrichtung voneinander entkoppelt, da diese Sende- und/oder Empfangseinrichtung auf einer separaten mechanischen Schnittstelle angeordnet ist, welche nicht die mechanische Schnittstelle der Navigationssensoreinheit ist. Insbesondere können beide Einrichtungen auf unterschiedlichen Halterungen und/oder mittels verschiedener Verbindungsreinrichtungen mit dem Grundkörper des Fahrzeugs verbunden sein. Dabei können diese ebenfalls mit Hilfe von voneinander unabhängigen Vibrationsdämpfungseinrichtungen gegenüber dem Grundkörper des Fahrzeugs mechanisch gedämpft sein.

Wie zuvor erläutert kann die Sende- und/oder Empfangseinrichtung eine Antenne und/oder eine Lichtquelle aufweisen. Die Sende- und/oder Empfangscharakteristik der Sende- und/oder Empfangseinrichtung kann insbesondere eine räumliche Variation einer Intensität und/oder einer Feldstärke und/oder einer Polarisation und/oder einer Phase und/oder eines Laufzeitunterschieds empfangener oder gesendeter Wellen aufweisen. Sofern die Relativposition und/oder Relativorientierung der Sende- und/oder Empfangseinrichtung relativ zu dem Grundkörper des Fahrzeugs durch mechanische Einwirkung verstellt wird, kann die Stell- und/oder Steuereinrichtung einen oder mehrere der vorgenannten Parameter der Sende- und/oder Empfangscharakteristik der Sende- und/oder Empfangseinrichtung so verändern, dass eine möglichst effiziente Kommunikation der Sende- und/oder Empfangscharakteristik mit einem Kommunikationspartner wiederhergestellt wird.

Zudem wird vorgeschlagen, dass die Navigationssensoreinheit eine inertiale Messeinheit (Inertial Measurement Unit, IMU), eine GNSS-Einrichtung (Globales Navigationssatellitensystem) und/oder ein Hodometer aufweist. Die Navigationssensoreinheit kann insbesondere eine Kombination zweier oder mehrere der vorgenannten Einrichtungen aufweisen, insbesondere um die Position und/oder Orientierung des Fahrzeugs in der Umgebung mit größerer Genauigkeit und/oder Zuverlässigkeit bestimmen zu können.

Gemäß einer möglichen Ausführungsform der Erfindung wird vorgeschlagen, dass die Detektionseinrichtung mindestens einen Lichtlaufzeitsensor (Time-of-Flight-Sensor, ToF-Sensor) aufweist, welcher eingerichtet ist, um eine Relativposition und/oder Relativorientierung der Navigationssensoreinheit und/oder der Sende- und/oder Empfangseinrichtung mittels einer Lichtlaufzeitmessung zwischen der Detektionseinrichtung und einem Referenzpunkt des Grundkörpers des Fahrzeugs zu detektieren. Time-of-Flight-Sensoren sind bekannte Einrichtungen, die auf der Basis von LED-Licht oder Laserlicht, insbesondere Infrarotstrahlung, arbeiten. Die Detektionseinrichtung kann insbesondere mehrere Lichtlaufzeitsensoren aufweisen, die die Zuverlässigkeit und/oder Genauigkeit einer ermittelten Änderung einer Relativposition und/oder Relativorientierung der Navigationssensoreinheit und/oder der Sende- und/oder Empfangseinrichtung relativ zu dem Grundkörper des Fahrzeugs verbessern. Der Lichtlaufzeitsensor ist in der Lage, präzise Messungen einer Fehlausrichtung in Echtzeit zu liefern, die dann wiederum genutzt werden können, um gegebenenfalls eine Flugbahn und/oder eine Position und/oder Orientierung des Fahrzeugs anzupassen.

Alternativ oder zusätzlich zu einem Lichtlaufzeitsensor kann die Detektionseinrichtung mindestens einen Bilddatensensor aufweisen, welche eingerichtet ist, um eine Relativposition und/oder Relativorientierung der Navigationssensoreinheit und/oder der Sende- und/oder Empfangseinrichtung mittels der Aufnahme von digitalen Bilddaten, welche die Navigationssensoreinheit und/oder die Sende- und/oder Empfangseinrichtung an dem Grundkörper des Fahrzeugs wiedergeben, zu detektieren. Der Bilddatensensor kann eine Kamera und/oder einen Kamerachip (z.B. CCD-Chip), insbesondere in einer Stereo-Kameraanordnung, und/oder ein LED-Array aufweisen. Insbesondere ist ein räumlicher Erfassungsbereich des Bilddatensensors so ausgerichtet, dass dieser sowohl mindestens einen Teilbereich des Grundkörpers des Fahrzeugs als auch mindestens einen Teilbereich der Navigationssensoreinheit und/oder der Sende- und/oder Empfangseinrichtung erfasst, deren Relativposition und/oder Relativorientierung überwacht werden soll. Die der Detektionseinrichtung zugeordnete Recheneinrichtung weist vorzugsweise eine Bilddatenverarbeitungseinrichtung und/oder -software auf, die geeignet ist, zeitlich nacheinander aufgenommene Bilddaten miteinander zu vergleichen und daraus eine Änderung zu ermitteln, welche das Ergebnis einer Änderung der Relativposition und/oder Relativorientierung der Navigationssensoreinheit und/oder der Sende- und/oder Empfangseinrichtung relativ zu dem Grundkörper des Fahrzeugs ist.

Alternativ oder zusätzlich kann die Detektionseinrichtung mindestens einen Absolut-Distanzsensor aufweisen, welcher eingerichtet ist, um eine Relativposition und/oder Relativorientierung der Navigationssensoreinheit und/oder der Sende- und/oder Empfangseinrichtung mittels einer absoluten Distanzmessung zwischen der Detektionseinrichtung und einem Referenzpunkt des Grundkörpers des Fahrzeugs zu detektieren. Es empfiehlt sich, vorzugsweise einen oder insbesondere zwei zueinander beabstandete Absolut-Distanzsensoren zu verwenden, um sowohl die Positionsänderung als auch die Orientierungsänderung in der zu überwachenden Raumrichtung ermitteln zu können. Gegenüber anderen Messverfahren weist eine absolute Distanzmessung den Vorteil auf, dass neben einer Relativposition und/oder Relativorientierung der Navigationssensoreinheit und/oder der Sende- und/oder Empfangseinrichtung auch eine Änderung der Relativposition und/oder Relativorientierung direkt gemessen werden kann, insbesondere ohne die Notwendigkeit einer Initialisierung oder Kalibrierung der Detektionseinrichtung. Dies hat insbesondere in rauen Umgebungen besondere Vorteile.

Die Detektionseinrichtung kann beispielsweise einen motorisch in Bezug auf seine Position und/oder Orientierung bewegten Absolut-Distanzsensor aufweisen, der so bewegt wird, dass stets, bevorzugt in Echtzeit, eine Sichtlinie zwischen dem Absolut-Distanzsensor und einem Referenzpunkt bestehen bleibt. Der Absolut-Distanzsensor kann insbesondere ein Inkrementalgeber sein, welcher Positionsänderungen oder Winkeländerungen erfasst. Detektionseinrichtungen mit motorisch bewegten Sensoren weisen bevorzugt Gleichstrommotoren, insbesondere Schrittmotoren, auf, um den Sensor zu verschieben oder zu drehen. Eine zugeordnete Recheneinrichtung kann die Position und/oder Orientierung des Sensors mit Hilfe einer dynamischen Zielverfolgung (Dynamic Target Tracking) oder durch Passieren und Registrieren von Markierungen durch den Sensor ermitteln. Wenn die Sichtlinie unterbrochen wird, kann die Detektionseinrichtung schnell reagieren und den Referenzpunkt durch Bewegen des Sensors wiederfinden, um die Abstandsmessung fortzusetzen. Durch die hochgenaue Verfolgung des Referenzpunktes können in dynamischen Szenarien optimale Resultate erreicht werden. Die automatisierte und motorisierte Bewegung des Sensors reduziert den Bedarf einer manuellen Ausrichtung, wodurch wiederum Zeit bei der Einrichtung und dem Betrieb der Detektionseinrichtung gespart wird. Motorisierte Absolut-Distanzsensoren sind unter anderem für Abstandsmessungen an besonders großen Fahrzeugen geeignet, da diese über große Stellbereiche arbeiten können, ohne dass die Detektionseinrichtung repositioniert werden muss. Alternativ kann die Detektionseinrichtung von optischen Messverfahren Gebrauch machen, die keinen motorischen Antrieb eines Sensors erfordern. Zu diesen Verfahren zählen beispielsweise die Phasenmodulation und Laserinterferometrie. Diese Verfahren sind für statische oder semistatische Anwendungen geeignet, bei welchen der Sensor nicht dynamisch verfahren werden muss. Der Sensor ist in diesem Fall stationär relativ zu einem zu beobachtenden Referenzpunkt des Grundkörpers des Fahrzeugs angeordnet und ausgerichtet. Detektionseinrichtungen dieser Art können eine Messgenauigkeit im Submillimeter-Bereich aufweisen und sind ideal für Anwendungen, die wiederholte Messungen an definierten Referenzpunkten oder entlang eines vorhersehbaren Pfades erfordern. Nicht motorisierte Detektionseinrichtungen sind grundsätzlich kleiner und leichter als motorisierte Alternativen und sind dadurch einfacher in beengte Bauräume oder Robotersysteme zu integrieren. Insbesondere können eine Systemkomplexität, ein Wartungsaufwand und/oder ein Energieverbrauch verringert werden, bei gleichzeitig präzisen und stabilen Messergebnissen.

Die Ausführungen zu der Detektionseinrichtung, insbesondere zu der Anzahl der Sensoren, gelten unabhängig von der Art der verwendeten Sensoren für jeweils nur einen zu erfassenden Freiheitsgrad. Zur Ermittlung der Relativposition und Relativorientierung der Navigationssensoreinheit bzw. Sende- und/oder Empfangseinrichtung unter Berücksichtigung aller Freiheitsgrade sind entsprechende Vervielfältigungen der Sensoren notwendig. Bei drei Translationsfreiheitsgraden und drei Rotationsfreiheitsgraden ist eine zur Überwachung nur eines Freiheitsgrads notwendige Sensorik somit grundsätzlich sechs Mal vorzusehen.

Gemäß einer besonderen Ausführungsform wird vorgeschlagen, dass das Fahrzeug eine Kombination aus mindestens zwei, insbesondere unterschiedlichen, Detektionseinrichtungen aufweist. Als vorteilhaft vorgeschlagen wird eine Kombination aus mindestens einem Lichtlaufzeitsensor und einem Bilddatensensor oder eine Kombination aus mindestens einem Lichtlaufzeitsensor und mindestens einem Absolut-Distanzsensor oder eine Kombination aus einem Bilddatensensor und mindestens einem Absolut-Distanzsensor. Durch die Kombination mehrerer, insbesondere unterschiedlicher, Detektionseinrichtungen kann eine Genauigkeit und Zuverlässigkeit der erzielten Messergebnisse erreicht werden, was schließlich zu einer besonders präzisen Bestimmung der Position und/oder der Orientierung des Fahrzeugs führt. Besondere Vorzüge bietet beispielsweise eine Kombination zwischen einem Lichtlaufzeitsensor und einem Absolut-Distanzsensor. Der Lichtlaufzeitsensor wird durch den Absolut-Distanzsensor ergänzt, um Detektions-Unterbrechungen zu verhindern und/oder gegebenenfalls notwendige Re-Initialisierungen des Lichtlaufzeitsensors zu unterstützen. Damit wird die Zuverlässigkeit der Detektionseinrichtung und nicht zuletzt auch die Navigation des Fahrzeugs sichergestellt.

Kombinationen der vorgenannten Art beinhalten vorzugsweise einen primären Sensor und einen sekundären Sensor. Der primäre Sensor ist derjenige, welcher präzise Messdaten über die Distanz zwischen der Detektionseinrichtung/dem primären Sensor und dem Referenzpunkt des Grundkörpers des Fahrzeugs liefert. Der primäre Sensor kann bevorzugt ein Lichtlaufzeitsensor sein, alternativ jedoch ebenso ein Absolut-Distanzsensor oder ein Bilddatensensor. Der sekundäre Sensor, beispielsweise ein Absolut-Distanzsensor, stellt redundante Messdaten zur Verfügung, welche beispielsweise bei Ausfall des primären Sensors oder für einen Vergleich mit den Messdaten des primären Sensors verwendet werden können.

Insbesondere wird vorgeschlagen, dass die Recheneinrichtung des Fahrzeugs ausgebildet ist, um die von den mindestens zwei Detektionseinrichtungen detektierten Relativpositionen und/oder Relativorientierungen der Navigationssensoreinheit und/oder der Sende- und/oder Empfangseinrichtung miteinander zu vergleichen und/oder gegeneinander auszutauschen. Die Kombination der Messdaten der mindestens zwei Detektionseinrichtungen ermöglicht die Feststellung eines Sensor-Initialisierungsstatus oder eines Sensorfehlers oder die Durchführung einer Re-Initialisierung eines ausgefallenen Sensors.

Schließlich wird in Bezug auf die Art des erfindungsgemäßen Fahrzeugs vorgeschlagen, dass dieses ein bemanntes oder unbemanntes Fahrzeug ist. Insbesondere kann das Fahrzeug ein Luftfahrzeug und/oder ein Landfahrzeug und/oder ein Wasserfahrzeug sein. Unter dem Begriff Fahrzeug wird weiterhin beispielsweise ein relativ zu einem Grundkörper beweglicher industrieller Roboterarm verstanden. Fahrzeuge im Sinne der Erfindung können beispielsweise auch sein: Raumfahrzeuge und Systeme im Weltraum wie zum Beispiel Satelliten, Raumtransportfahrzeuge, Raumsonden, Planetenlandegeräte, Atmosphäreneintritts- und wiedereintrittsfahrzeuge, Raumstationen, Mond- und Planetenrover. Zu den vorgeschlagenen Wasserfahrzeugen zählen beispielsweise U-Boote, Einrichtungen für Unterwasserinspektionen, insbesondere Drohnen, Pipeline-Inspektionsmessgeräte, Roboterarme, Manipulatoren. Fahrzeuge können des Weiteren Exoskelette, Operationsroboter, Lager- und/oder Logistikroboter, Drohnen für die Handhabung oder Entsorgung von Gefahrgut oder ähnliches sein.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Sensor die Rede ist, ist dies so zu verstehen, dass genau ein Sensor, zwei Sensoren oder mehr Sensoren vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand von in den Figuren dargestellten Ausführungsbeispielen erläutert und beschrieben.
- **Fig. 1**: zeigt ein Fahrzeug mit einer Navigationssensoreinheit und einer Detektionseinrichtung zum Detektieren einer Relativposition und/oder Relativorientierung der Navigationssensoreinheit relativ zu einem Grundkörper des Fahrzeugs.
- **Fig. 2**: zeigt einen vergrößerten Teilbereich des Fahrzeugs mit der Navigationssensoreinheit und der Detektionseinrichtung in einer ersten Relativposition und/oder Relativorientierung.
- **Fig. 3**: zeigt den Teilbereich gemäß Fig. 2 mit der Navigationssensoreinheit und der Detektionseinrichtung in einer zweiten Relativposition und/oder Relativorientierung.
- **Fig. 4**: zeigt ein Fahrzeug gemäß einer weiteren Ausführungsform mit einer Navigationssensoreinheit und einer Kombination aus einer ersten Detektionseinrichtung und einer zweiten Detektionseinrichtung.
- **Fig. 5**: zeigt eine weitere Ausführungsform eines Fahrzeugs mit einer Navigationssensoreinheit, einer mit der Navigationssensoreinheit mechanisch starr gekoppelten Sende- und/oder Empfangseinrichtung zur Kommunikation mit einem externen Kommunikationspartner und einer gemeinsamen Detektionseinrichtung, welche eine Relativposition und/oder Relativorientierung der Navigationssensoreinheit und der Sende- und/oder Empfangseinrichtung relativ zu dem Grundkörper des Fahrzeugs detektiert.
- **Fig. 6**: zeigt eine weitere Ausführungsform eines Fahrzeugs mit einer Navigationssensoreinheit, einer mechanisch von der Navigationssensoreinheit entkoppelten Sende- und/oder Empfangseinrichtung und zwei separaten Detektionseinrichtungen.

### FIGURENBESCHREIBUNG

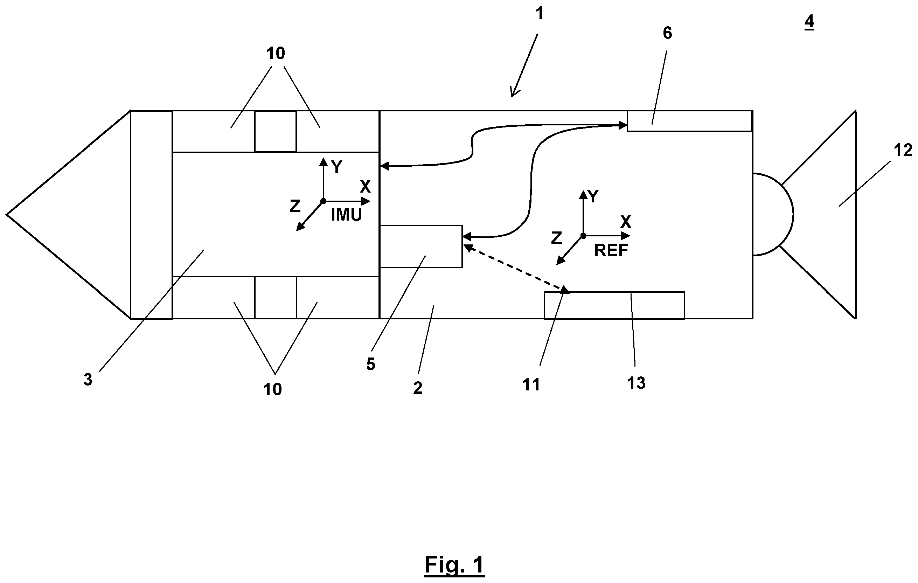

**Fig. 1** zeigt ein Fahrzeug ist 1, welches beispielhaft als Luftfahrzeug, nämlich hier eine unbemannte Transportrakete, ausgebildet ist. Das Fahrzeug 1 weist einen Grundkörper 2 sowie einen Antrieb 12 zur Fortbewegung des Fahrzeugs 1 durch eine Umgebung 4 auf.

Die nachfolgenden Erläuterungen sind unabhängig von der Art des Fahrzeugs 1 und gelten ebenso für andere bemannte oder unbemannte Fahrzeuge zu Land, zu Wasser, zu Luft oder für Raumfahrzeuge oder bewegliche, selbständig navigierende Einrichtungen von komplexen Systemen, z.B. Roboterarme von industriellen Robotersystemen.

Zur Navigation des Fahrzeugs 1 in der Umgebung 4, insbesondere zur Ermittlung einer Position und/oder Orientierung des Fahrzeugs 1 im Raum weist das Fahrzeug 1 eine Navigationssensoreinheit 3 auf. Die Navigationssensoreinheit 3 ist hier eine inertiale Messeinheit (Inertial Measuere Unit, IMU). Alternativ könnte die Navigationssensoreinheit 3 beispielsweise eine GNSS-Einrichtung sein. Auch Kombinationen unterschiedlicher Navigationssensoreinheiten 3 sind möglich, beispielsweise die Kombination einer IMU mit einer GNSS-Einrichtung und/oder (insbesondere bei Landfahrzeugen) einem Hodometer.

Die Navigationssensoreinheit 3 besteht aus einer Mehrzahl einzelner nicht weiter dargestellter Sensoren, darunter typischerweise drei Translationssensoren und drei Rotationssensoren. Insgesamt ist die Navigationssensoreinheit 3 dadurch befähigt, die Position und/oder Orientierung des Fahrzeugs 1 in der Umgebung 4 zu bestimmen.

Die Navigationssensoreinheit 3 ist über mehrere Vibrationsdämpfungseinrichtungen 10 mit dem Grundkörper 2 des Fahrzeugs 1 verbunden, um Einwirkungen von bei der Fortbewegung des Fahrzeugs 1 auftretenden mechanischen Belastungen auf die Navigationssensoreinheit 3 zu reduzieren, insbesondere quasistatische oder dynamische Kräfte zu dämpfen.

Die Navigationssensoreinheit 3 stellt Messdaten bereit, welche von einer Recheneinrichtung 6 mittels eines Algorithmus (z. B. eines IMU-Algorithmus oder eines für GNSS-Daten oder Hodometer-Daten geeigneten Algorithmus) zu Informationen über Beschleunigungen, Geschwindigkeiten und Rotationswinkel der Navigationssensoreinheit 3 verarbeitet werden, um die Position und Orientierung des Fahrzeugs 1 in der Umgebung 4 zu ermitteln. Die Recheneinrichtung 6 kann Teil eines zentralen Computers des Fahrzeugs 1 sein, welcher zum Beispiel auch eine Steuersoftware zum Steuern des Fahrzeugs 1 in der Umgebung 4 bereitstellt.

Luftfahrzeuge wie die hier dargestellte Transportrakete sind insbesondere während einer Startphase quasistatischen Kräften ausgesetzt, die größer als 1G bis hin zu 10 G, 30 G oder sogar 40 G sein können. Weiterhin treten aerodynamische Effekte und Verbrennungsinstabilitäten auf, die zu Vibrationen in der Umgebung 4 und/oder an dem Grundkörper 2 des Fahrzeugs 1 führen können Diese Vibrationen haben sowohl durch ihre Amplitude als auch ihr Frequenzspektrum deutliche Auswirkungen auf die Navigation des Fahrzeugs 1 und können Beschleunigungen von bis hin zu mehreren hundert G-RMS aufweisen (G-RMS = Root Mean Square of Acceleration; quadratischer Mittelwert der Beschleunigung).

Da die Navigationssensoreinheit 3 als inertiale Messeinheit unter anderen Sensoren nutzt, die Beschleunigungen messen, ist sie grundsätzlich anfällig für Vibrationen. Daher können die Messdaten signifikante Fehler aufweisen, wenn die Vibrationen nicht ausreichend berücksichtigt werden. Um die Einflüsse der Vibrationen abzuschwächen, ist die Navigationssensoreinheit 3 mittels der vorgenannten Vibrationsdämpfungseinrichtungen 10 an dem Grundkörper 2 installiert. Die Vibrationsdämpfungseinrichtungen 10 können passive und/oder aktive Dämpfungssysteme sein. Passive Systeme umfassen beispielsweise viskoelastische Dämpfer, die Vibrationen innerhalb eines bestimmten Frequenzbereichs effektiv dämpfen können. Weiche Halterungen und Dämpfer haben grundsätzlich nicht-lineare Eigenschaften. Dies bedeutet, dass die Steifigkeit oder die Dämpfungskräfte durch Verlagerung, Geschwindigkeit, Temperatur oder andere Faktoren variieren. Das Dämpfungsverhalten bei dynamischen Konditionen unterscheidet sich zudem von dem Dämpfungsverhalten bei statischen Konditionen.

All diese Effekte können insgesamt zu einer Verlagerung des Schwerpunkts der Navigationssensoreinheit 3 relativ zu dem Grundkörper 2 des Fahrzeugs 1 und damit beispielsweise zu einer Abweichung des Fahrzeugs 1 von einer angestrebten Fortbewegungsbahn führen. Das Steuersystem des Fahrzeugs 1 muss daher geeignet sein, diese Fehler zu korrigieren. Zu diesem Zweck weist das Fahrzeug 1 eine Detektionseinrichtung 5 auf, welche die Verlagerung der Navigationssensoreinheit 3 relativ zu dem Grundkörper 2 des Fahrzeugs 1 detektiert, indem die Detektionseinrichtung 5 zeitlich fortlaufend eine Relativposition und/oder Relativorientierung der Navigationssensoreinheit 3 relativ zu dem Grundkörper 2 misst.

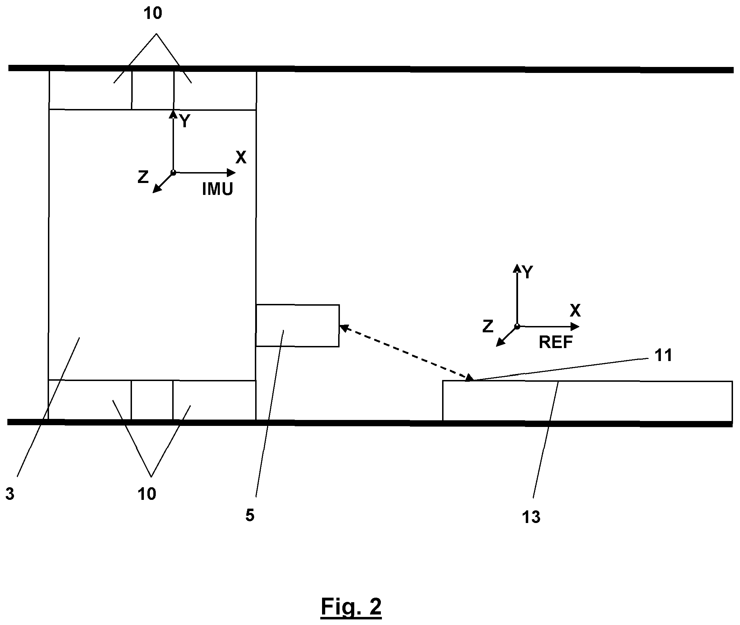

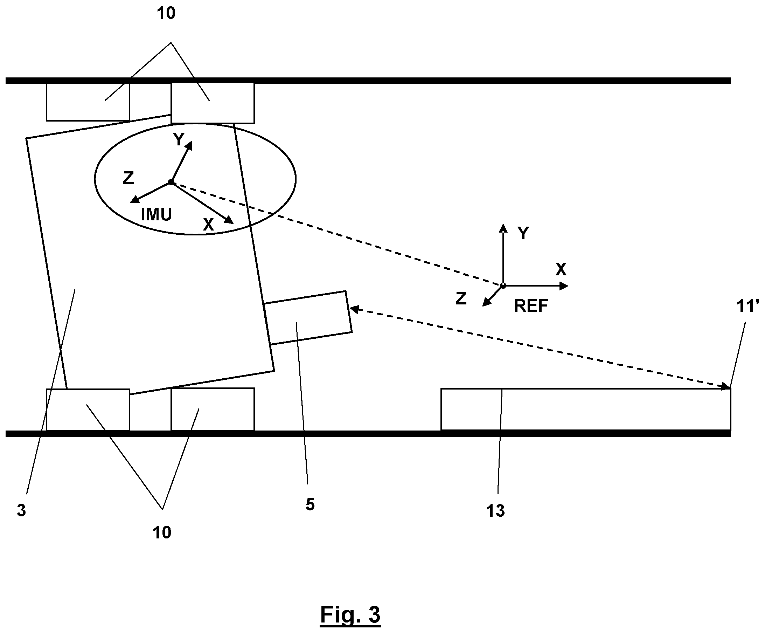

In einem (insbesondere unbelasteten) Ausgangszustand (dargestellt in **Fig. 2****)** weist die Navigationssensoreinheit 3 zu einem ersten Zeitpunkt eine definierte Relativposition und/oder Relativorientierung relativ zu dem Grundkörper 2 auf, welche sich bei einem Angreifen von quasistatischen oder dynamischen Kräften verändern kann. Die daraus resultierende geänderte Relativposition und/oder Relativorientierung (dargestellt **in** **Fig. 3****)** wird zu einem zweiten Zeitpunkt von der Detektionseinrichtung 5 detektiert. Eine der Detektionseinrichtung 5 zugeordnete Recheneinrichtung 6, welche hier gleichzeitig als Recheneinrichtung 6 der Navigationssensoreinheit 3 fungiert, ermittelt aus den zeitlich aufeinanderfolgend detektierten Relativpositionen und/oder Relativorientierungen eine Änderung der Relativposition und/oder Relativorientierung und korrigiert die von der Navigationssensoreinheit 3 ermittelte Position und/Orientierung des Fahrzeugs 1 um diese Änderung.

Zu beachten ist, dass die Änderung der Relativposition und/oder Relativorientierung hier nur beispielshaft für eine Raumrichtung veranschaulicht ist. Die nachfolgenden Ausführungen zu der Detektionseinrichtung 5 beziehen sich somit auf nur einen Freiheitsgrad der Translation oder Rotation. Zur Abdeckung aller Freiheitsgrade sind entsprechende Vervielfältigungen der Sensoren der Detektionseinrichtung 5 notwendig.

Die Detektionseinrichtung 5 weist gemäß der in den Fig. 1 bis 3 dargestellten Ausführungsform beispielsweise einen Lichtlaufzeitsensor (Time Of Flight Sensor, TOF-Sensor) auf. Dieser ermittelt eine Zeitdauer, welche von einer Lichtquelle des Lichtlaufzeitsensors ausgesendetes Licht benötigt, um nach einer Reflektion an einem dem Grundkörper 2 zugeordneten Reflektor 13 zurück zu der Detektionseinrichtung 5 zu gelangen.

Bei einer Verlagerung der Navigationssensoreinheit 3 relativ zu dem Grundkörper 2 verlagert sich auch die hier beispielsweise ortsfest an der Navigationssensoreinheit 3 angeordnete Detektionseinrichtung 5. Damit wandert der in den Figuren 1 und 2 dargestellte Ausgangs-Referenzpunkt 11, an welchem das von der Lichtquelle ausgesendete Licht an dem Reflektor 13 des Grundkörpers 2 reflektiert wird, hin zu dem in Fig. 3 dargestellten Referenzpunkt 11'. Der Abstand zwischen dem Lichtlaufzeitsensor und dem Referenzpunkt 11' ist größer als der Abstand zwischen dem Lichtlaufzeitsensor und dem Referenzpunkt 11, so dass es zu einem messbaren Lichtlaufzeitunterschied kommt. Die Recheneinrichtung 6 ermittelt anhand des Lichtlaufzeitunterschieds eine Änderung der Relativposition und/oder Relativorientierung der Navigationssensoreinheit 3 und korrigiert die Position und/oder Orientierung des Fahrzeugs 1 im Raum um diese Änderung. Dadurch wird einer Steuereinrichtung des Fahrzeugs 1 eine aktuelle Position und/oder Orientierung des Fahrzeugs 1 zur Verfügung gestellt, welche genutzt werden kann, um das Fahrzeug 1 zu einem gewünschten Ziel zu steuern.

Der Reflektor 13 ist ausgehend von der Lichtquelle der Detektionseinrichtung 5 aus unterschiedlichen Richtungen sichtbar, sodass von der Lichtquelle emittiertes Licht stets von (irgend)einem Referenzpunkt 11, 11' des Reflektors 13 zurück zu der Detektionseinrichtung 5 reflektiert werden kann. Um das reflektierte Licht an der Detektionseinrichtung 5 detektieren zu können, weist diese beispielsweise einen entsprechend großen Kamerachip und/oder eine geeignete Optik auf.

Die Recheneinrichtung 6 kann bei der Messdaten-Auswertung eine übliche Signalverarbeitung anwenden, welche beispielsweise eine Störfilterung, Merkmalsextraktion und/oder Datenausrichtung/Datenfusion mit Messdaten anderer Sensoren beinhaltet. Des Weiteren können die Messdaten in ein Format überführt werden, welches geeignet ist, mit den Daten anderer Sensoren fusioniert zu werden. Um die Messdaten der Detektionseinrichtung 5 mit den Messdaten der Navigationssensoreinheit 3 zu fusionieren, können beispielsweise Kalman-Filter oder Partikelfilter verwendet werden. Diese Filter helfen, Informationen verschiedener Sensoren zu kombinieren, Unsicherheiten zu reduzieren und die Zuverlässigkeit der ermittelten Position und/oder Orientierung zu verbessern.

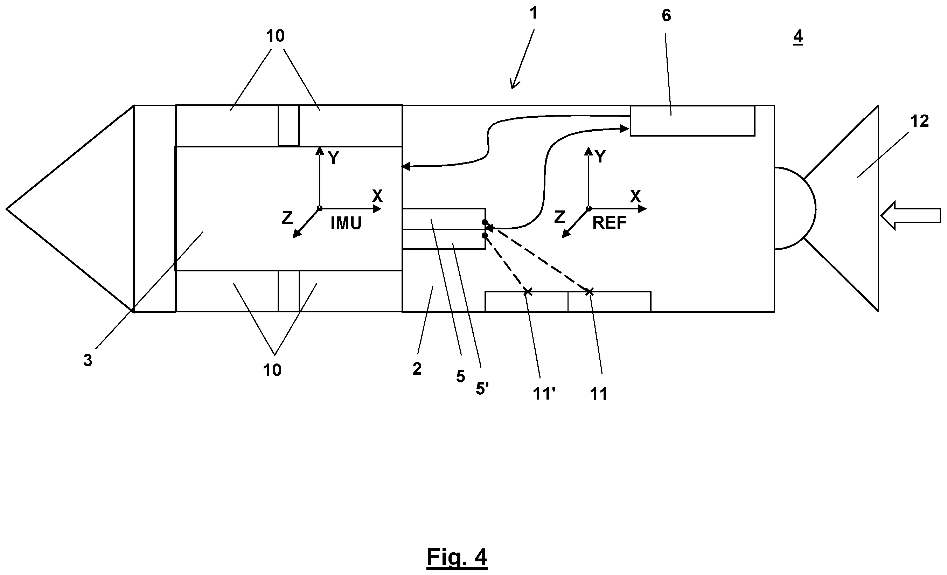

**Fig. 4** zeigt eine weitere mögliche Ausführungsform der Erfindung, bei welcher der Navigationssensoreinheit 3 zwei Detektionseinrichtungen 5, 5' zugeordnet sind, nämlich hier beispielhaft ein Lichtlaufzeitsensor (Detektionseinrichtung 5) und ein Absolut-Distanzsensor (Detektionseinrichtung 5'). Jeder Detektionseinrichtung 5, 5' ist ein eigener Referenzpunkt 11, 11' an/auf dem Grundkörper 2 des Fahrzeugs 1 zugeordnet, welcher sich jeweils relativ zu der in Fig. 4 dargestellten Ausgangsposition verschiebt, wenn sich die Relativposition und/oder Relativorientierung der Navigationssensoreinheit 3 (und damit der Detektionseinrichtung 5, 5') relativ zu dem Grundkörper 2 ändert.

Beide Detektionseinrichtungen 5, 5' liefern in einem zeitlichen Verlauf jeweils Messdaten an die Recheneinrichtung 6 des Fahrzeugs 1. Die Recheneinrichtung 6 ermittelt aus den zeitlich fortlaufend detektierten Messdaten der Detektionseinrichtungen 5, 5' jeweils separat für jede der Detektionseinrichtungen 5, 5' eine Änderung der Relativposition und/oder Relativorientierung der Navigationssensoreinheit 3. Die beiden ermittelten Relativpositionen und/oder Relativorientierungen können anschließend miteinander verglichen werden, um die Plausibilität der Messdaten zu überprüfen.

Sofern eine Detektionseinrichtung 5, 5' beispielsweise einen Fehler aufweist, können die Messdaten der anderen (redundanten) Detektionseinrichtung 5', 5, für die weiteren Berechnungen verwendet werden. Diese Ausführungsform zielt insbesondere darauf ab, die Gesamtleistung, Genauigkeit und Robustheit des Lichtlaufzeitsensors (Detektionseinrichtung 5) durch die Integration der absoluten Distanzmessung (Detektionseinrichtung 5') zu verbessern. Insgesamt werden damit verbesserte Navigationseigenschaften des Fahrzeugs 1 erreicht. Die absolute Distanzmessung bietet zudem eine Positions- und/oder Orientierungsverfolgung, ohne dass eine Initialisierung oder Kalibrierung der Detektionseinrichtung 5' erforderlich ist. Diese Vorzüge der absoluten Distanzmessung werden genutzt, um die Messdaten mit denjenigen der Lichtlaufzeitmessung oder alternativ einer Bilddatenerfassung zu kombinieren. Sofern die erste Detektionseinrichtung 5 beispielsweise durch Umgebungseinflüsse eine Betriebseinschränkung erfährt, ist es besonders einfach möglich, die Detektionseinrichtung 5 mit Hilfe der absolut messenden Detektionseinrichtung 5' neu zu kalibrieren.

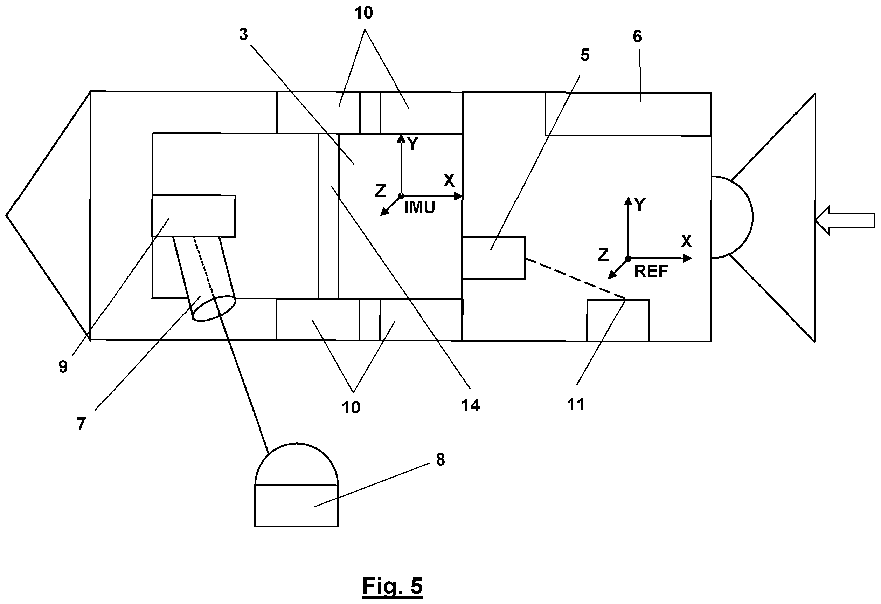

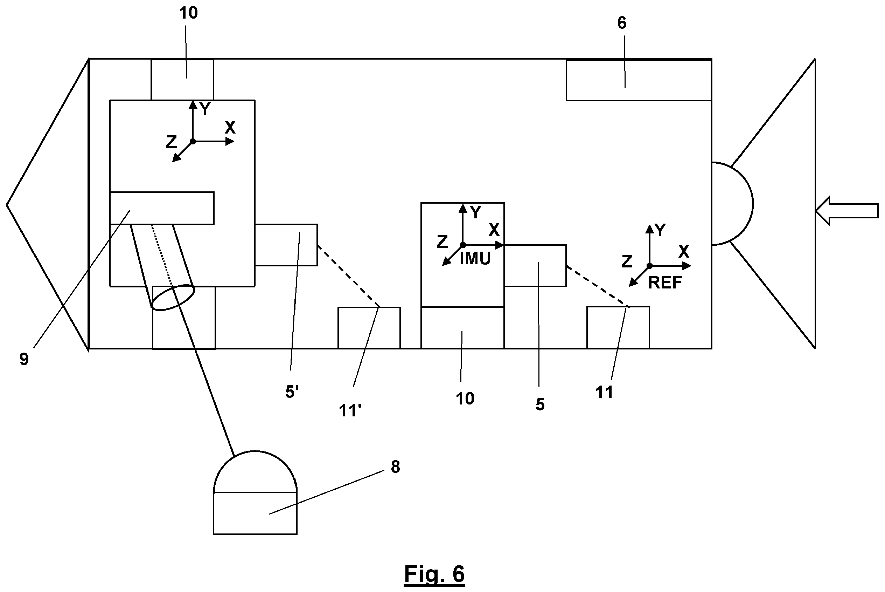

Die **Figuren 5** und **6** zeigen Fahrzeuge 1, welche eine Sende- und/oder Empfangseinrichtung 7 aufweisen, um mit externen Kommunikationspartnern 8 zu kommunizieren. Ein Kommunikationspartner 8 kann beispielsweise eine Kommunikationseinrichtung eines anderen Fahrzeugs 1, einer Basisstation oder einer anderen Einrichtung sein.

Da die ordnungsgemäße Funktion der Sende- und/oder Empfangseinrichtung 7 - genau wie die der Navigationssensoreinheit 3 - von präzisen Informationen über ihre Position und/oder Orientierung in der Umgebung 4 und relativ zu dem Kommunikationspartner 8 abhängig ist, ist der Sende- und/oder Empfangseinrichtung 7 ebenfalls eine Detektionseinrichtung 5 zugeordnet, welche eingerichtet ist, um zeitlich fortlaufend eine Relativposition und/oder Relativorientierung der Sende- und/oder Empfangseinrichtung 7 relativ zu dem Grundkörper 2 des Fahrzeugs 1 zu detektieren.

Gemäß Fig. 5 ist die Sende- und/oder Empfangseinrichtung 7 des Fahrzeugs 1 über eine Kupplung 14 mit der Navigationssensoreinheit 3 verbunden und mittels gemeinsamer Vibrationsdämpfungseinrichtungen 10 an dem Grundkörper 2 des Fahrzeugs 1 gelagert. Die Kupplung 14 ist derart starr ausgebildet, dass eine Änderung der Relativposition und/oder Relativorientierung der Navigationssensoreinheit 3 relativ zu dem Grundkörper 2 der Änderung der Relativposition und/oder Relativorientierung der Sende- und/oder Empfangseinrichtung 7 relativ zu dem Grundkörper 2 entspricht. Daher ist dieser Einheit aus Sende- und/oder Empfangseinrichtung 7 und Navigationssensoreinheit 3 (nur) eine gemeinsame Detektionseinrichtung 5 zugeordnet.

Die Detektionseinrichtung 5 kann im Übrigen nach einer der zuvor beschriebenen Ausführungsformen ausgebildet sein, beispielsweise einen Lichtlaufzeitsensor und/oder Absolut-Distanzsensor und/oder Bilddatensensor aufweisen. Insbesondere ist es möglich, mehrere vorgenannte Sensoren in der Detektionseinrichtung 5 zu kombinieren, um die Zuverlässigkeit und Störungssicherheit der Navigation des Fahrzeugs 1 sicherzustellen. Der Detektionseinrichtung 5 ist wiederum eine Recheneinrichtung 6 zugeordnet, welche ebenso die Recheneinrichtung 6 der Navigationssensoreinheit 3 sein kann.

Der Sende- und/oder Empfangseinrichtung 7, welche beispielsweise eine Antenne oder eine Lichtsender/-empfänger sein kann, ist hier bevorzugt ein Stell- und/oder Steuermechanismus 9 zugeordnet, welcher in Abhängigkeit von einer Änderung der Position und/oder Orientierung der Sende- und/oder Empfangseinrichtung 7 relativ zu dem Grundkörper 2 (beispielsweise infolge von quasistatischen oder dynamisch wirkenden Kräften) eine Sende- und Empfangscharakteristik der Sende- und/oder Empfangseinrichtung 7 ändern kann, indem eine Intensität und/oder Feldstärke und/oder Polarisation und/oder Phase und/oder ein Laufzeitunterschied empfangener oder gesendeter Wellen räumlich variiert wird. Des Weiteren kann die Stell- und/oder Steuereinrichtung 9 die dejustierte Position und/oder Orientierung der Sende- und/oder Empfangseinrichtung 7 wieder in die gewünschte Ausgangsstellung "zurückstellen", so dass die Sende- und Empfangseinrichtung 7 relativ zu dem externen Kommunikationspartner 8 wieder optimal ausgerichtet ist.

Fig. 6 zeigt eine Ausführungsform, bei welcher die Sende- und/oder Empfangseinrichtung 7 und die Navigationssensoreinheit 3 mechanisch voneinander entkoppelt sind. Zu diesem Zweck sind diese nicht miteinander, sondern jeweils für sich über separat zugeordnete Vibrationsdämpfungseinrichtungen 10 mit dem Grundkörper 2 des Fahrzeugs 1 verbunden. Der Begriff "entkoppelt" bedeutet in diesem Zusammenhang jedoch nicht, dass es überhaupt keine Wechselwirkungen zwischen der Navigationssensoreinheit 3 und der Sende- und/oder Empfangseinrichtung 7 gibt. Vielmehr bedeutet dies, dass es sich bei der Navigationssensoreinheit 3 und der Sende- und/oder Empfangseinrichtung 7 um zwei getrennte Einrichtungen handelt, die einen gewissen Freiheitsgrad besitzen, um sich unabhängig voneinander bewegen und/oder drehen zu können. Insofern kann eine Verbindung zwischen diesen (hier beispielsweise indirekt über den Grundkörper 2 des Fahrzeugs 1) nicht als unendlich starr angesehen werden. Diese Dynamik zwischen der Navigationssensoreinheit 3 und der Sende- und/oder Empfangseinrichtung 7 wird durch zwei separate Detektionseinrichtungen 5, 5' berücksichtigt, von welchen eine erste Detektionseinrichtung 5 der Navigationssensoreinheit 3 und eine zweite Detektionseinrichtung 5' der Sende- und/oder Empfangseinrichtung 7 zugeordnet ist.

In einer gemeinsamen Recheneinrichtung 6 des Fahrzeugs 1 werden die Messdaten der Detektionseinrichtungen 5, 5' ausgewertet, um in einem zeitlichen Verlauf jeweils eine Änderung einer Position und/oder Orientierung der Navigationssensoreinheit 3 bzw. der Sende- und/oder Empfangseinrichtung 7 relativ zu dem Grundkörper 2 des Fahrzeugs 1 zu bestimmen und dann gegebenenfalls die Position und/oder Orientierung des Fahrzeugs 1 in der Umgebung 4 neu auszurichten.

### BEZUGSZEICHENLISTE

- 1: Fahrzeug
- 2: Grundkörper
- 3: Navigationssensoreinheit
- 4: Umgebung
- 5: Detektionseinrichtung
- 6: Recheneinrichtung
- 7: Sende- und/oder Empfangseinrichtung
- 8: Kommunikationspartner
- 9: Stell- und/oder Steuereinrichtung
- 10: Vibrationsdämpfungseinrichtung
- 11: Referenzpunkt
- 12: Antrieb
- 13: Reflektor
- 14: Kupplung

## Patentansprüche

1. Fahrzeug (1) mit einem Grundkörper (2) und einer an dem Grundkörper (2) angeordneten Navigationssensoreinheit (3) zum Ermitteln einer Position und/oder Orientierung des Fahrzeugs (1) in einer Umgebung (4), wobei die Position und/oder Orientierung des Fahrzeugs (1) bestimmt ist durch eine um eine Relativposition und/oder Relativorientierung der Navigationssensoreinheit (3) relativ zu dem Grundkörper (2) des Fahrzeugs (1) korrigierte Position und/oder Orientierung der Navigationssensoreinheit (3) in der Umgebung (4), **dadurch gekennzeichnet, dass** das Fahrzeug (1) eine Detektionseinrichtung (5) aufweist, die ausgebildet ist, um die Relativposition und/oder Relativorientierung der Navigationssensoreinheit (3) zeitlich fortlaufend zu detektieren, wobei das Fahrzeug (1) eine Recheneinrichtung (6) aufweist, die ausgebildet ist, um aus den zeitlich fortlaufend detektierten Relativpositionen und/oder Relativorientierungen eine Änderung der Relativposition und/oder Relativorientierung zu ermitteln und die von der Navigationssensoreinheit (3) ermittelte Position und/oder Orientierung des Fahrzeugs (1) um die von der Recheneinrichtung (6) ermittelte Änderung der Relativposition und/oder Relativorientierung der Navigationssensoreinheit (3) zu korrigieren.

2. Fahrzeug (1) nach Anspruch 1, **wobei** das Fahrzeug (1) eine an dem Grundkörper (2) angeordnete Sende- und/oder Empfangseinrichtung (7) zur Kommunikation mit einem externen Kommunikationspartner (8) in einer Umgebung (4) des Fahrzeugs (1) aufweist, wobei eine oder die Detektionseinrichtung (5) des Fahrzeugs (1) ausgebildet ist, um eine Relativposition und/oder Relativorientierung der Sende- und/oder Empfangseinrichtung (7) relativ zu dem Grundkörper (2) des Fahrzeugs (1) zeitlich fortlaufend zu detektieren.

3. Fahrzeug (1) nach Anspruch 2, **wobei** das Fahrzeug (1) eine Stell- und/oder Steuereinrichtung (9) aufweist, welche eingerichtet ist, um eine Sende- und/oder Empfangscharakteristik und/oder die Relativposition und/oder Relativorientierung der Sende- und/oder Empfangseinrichtung (7) in Abhängigkeit von einer aus den zeitlich fortlaufend detektieren Relativpositionen und/oder Relativorientierungen ermittelten Änderung der Relativposition und/oder Relativorientierung zu ändern.

4. Fahrzeug (1) nach einem der vorhergehenden Ansprüche, **wobei** die Navigationssensoreinheit (3) und/oder die Sende- und/oder Empfangseinrichtung (7) mittels mindestens einer Vibrationsdämpfungseinrichtung (10) an dem Grundkörper (2) des Fahrzeugs (1) gehalten ist.

5. Fahrzeug (1) nach einem der Ansprüche 2 bis 4, **wobei** die Navigationssensoreinheit (3) und die Sende- und/oder Empfangseinrichtung (7) mechanisch derart starr, insbesondere mittelbar, miteinander gekoppelt sind, dass die Änderung der Relativposition und/oder Relativorientierung der Navigationssensoreinheit (3) relativ zu dem Grundkörper (2) und die Änderung der Relativposition und/oder Relativorientierung der Sende- und/oder Empfangseinrichtung (7) relativ zu dem Grundkörper (2) gleich sind.

6. Fahrzeug (1) nach einem der Ansprüche 2 bis 4, **wobei** die Navigationssensoreinheit (3) und die Sende- und/oder Empfangseinrichtung (7) mechanisch derart voneinander entkoppelt sind, dass die Änderung der Relativposition und/oder Relativorientierung der Navigationssensoreinheit (3) relativ zu dem Grundkörper (2) des Fahrzeugs (1) im Wesentlichen unabhängig von der Änderung der Relativposition und/oder Relativorientierung der Sende- und/oder Empfangseinrichtung (7) relativ zu dem Grundkörper (2) ist.

7. Fahrzeug (1) nach einem der Ansprüche 2 bis 6, **wobei** die Sende- und/oder Empfangseinrichtung (7) eine Antenne und/oder eine Lichtquelle aufweist.

8. Fahrzeug (1) nach einem der Ansprüche 2 bis 7, **wobei** die Sende- und/oder Empfangscharakteristik der Sende- und/oder Empfangseinrichtung (7) eine räumliche Variation einer Intensität und/oder einer Feldstärke und/oder einer Polarisation und/oder einer Phase und/oder eines Laufzeitunterschieds empfangener oder gesendeter Wellen aufweist.

9. Fahrzeug (1) nach einem der vorhergehenden Ansprüche, **wobei** die Navigationssensoreinheit (3) eine Inertiale Messeinheit (Inertial Measurement Unit, IMU), eine GNSS-Einrichtung (Globales Navigationssatellitensystem) und/oder ein Hodometer aufweist.

10. Fahrzeug (1) nach einem der vorhergehenden Ansprüche, **wobei** die Detektionseinrichtung (5) mindestens einen Lichtlaufzeitsensor (Time-of-Flight-Sensor, ToF-Sensor) aufweist, welcher eingerichtet ist, um eine Relativposition und/oder Relativorientierung der Navigationssensoreinheit (3) und/oder der Sende- und/oder Empfangseinrichtung (7) mittels einer Lichtlaufzeitmessung zwischen der Detektionseinrichtung (5) und einem Referenzpunkt (11) des Grundkörpers (2) des Fahrzeugs (1) zu detektieren.

11. Fahrzeug (1) nach einem der vorhergehenden Ansprüche, **wobei** die Detektionseinrichtung (5) mindestens einen Bilddatensensor aufweist, welcher eingerichtet ist, um eine Relativposition und/oder Relativorientierung der Navigationssensoreinheit (3) und/oder der Sende- und/oder Empfangseinrichtung (7) mittels der Aufnahme von digitalen Bilddaten, welche die Navigationssensoreinheit (3) und/oder die Sende- und/oder Empfangseinrichtung (7) an dem Grundkörper (2) des Fahrzeugs (1) wiedergeben, zu ermitteln.

12. Fahrzeug (1) nach einem der vorhergehenden Ansprüche, **wobei** die Detektionseinrichtung (5) mindestens einen Absolut-Distanzsensor aufweist, welcher eingerichtet ist, um eine Relativposition und/oder Relativorientierung der Navigationssensoreinheit (3) und/oder der Sende- und/oder Empfangseinrichtung (7) mittels einer absoluten Distanzmessung zwischen der Detektionseinrichtung (5) und einem Referenzpunkt (11) des Grundkörpers (2) des Fahrzeugs (1) zu detektieren.

13. Fahrzeug (1) nach einem der Ansprüche 10 bis 12, **wobei** das Fahrzeug (1) eine Kombination aus mindestens zwei Detektionseinrichtungen (5) aufweist, nämlich eine Kombination aus
- mindestens einem Lichtlaufzeitsensor gemäß Anspruch 10 und einem Bilddatensensor gemäß Anspruch 11 oder
- mindestens einem Lichtlaufzeitsensor gemäß Anspruch 10 und mindestens einem Absolut-Distanzsensor gemäß Anspruch 12 oder
- einem Bilddatensensor gemäß Anspruch 11 und mindestens einem Absolut-Distanzsensor gemäß Anspruch 12.

14. Fahrzeug (1) nach Anspruch 13, **wobei** die Recheneinrichtung (6) des Fahrzeugs (1) ausgebildet ist, um die von den mindestens zwei Detektionseinrichtungen (5) detektierten Relativpositionen- und/oder Relativorientierungen der Navigationssensoreinheit (3) und/oder der Sende- und/oder Empfangseinrichtung (7) miteinander zu vergleichen und/oder gegeneinander auszutauschen.

15. Fahrzeug (1) nach einem der vorhergehenden Ansprüche, **wobei** das Fahrzeug (1) ein bemanntes oder unbemanntes Fahrzeug (1), insbesondere ein Luftfahrzeug und/oder ein Landfahrzeug und/oder ein Wasserfahrzeug, ist.
